# EUROPEAN PATENT APPLICATION

(11) **EP 2 182 511 A1**
(43) Date of publication of application: **05.05.2010**
(21) Application number: 09168668.3
(22) Date of filing: 26.08.2009
(51) Int. Cl.: G10L 13/02, G01C 21/36, G08G 1/09, B60R 16/037

(54) **Variable text-to-speech for automotive application**

(30) Priority: 03.09.2008 US 203856
(71) Applicant: Honda Motor Co., Ltd., Tokyo 107-8556 (JP)
(72) Inventor: Kirsch, David Michael, Raymond, OH 43067-9705 (US); Huang, Ritchie Winson, Raymond, OH 43067-9705 (US)
(74) Representative: Prechtel, Jörg

(57) **Abstract**

A text-to-speech (TTS) system implemented in an automotive vehicle is dynamically tuned to improve intelligibility over a wide variety of vehicle operating states and environmental conditions. In one embodiment of the present invention, a TTS system is interfaced to one or more vehicle sensors to measure parameters including vehicle speed, interior noise, visibility conditions, and road roughness, among others. In response to measurements of these operating parameters, TTS voice volume, pitch, and speed, among other parameters, may be tuned in order to improve intelligibility of the TTS voice system and increase its effectiveness for the operator of the vehicle.

## Description

### BACKGROUND OF THE INVENTION

### 1. Field of the Invention

The invention relates generally to a system and method for dynamically optimizing parameters of a text-to-speech ("TTS") system in response to automotive vehicle environmental conditions in order to maximize the intelligibility of a synthesized TTS voice.

### 2. Description of Related Art

Systems incorporating text-to-speech ("TTS") engines or synthesizers coupled to a database of textual data are well known and continue to find an ever-increasing number of applications. For example, automobiles equipped with TTS and speech-recognition capabilities simplify tasks that would otherwise distract a driver from driving. The uses of TTS systems in vehicles include controlling electronic systems aboard the vehicle, such as navigation systems or audio systems, receiving critical emergency broadcasts, and placing telephone calls, among others.

Certain environmental conditions, such as vehicle speed, interior noise, lighting conditions, and weather conditions, among others, can affect a driver's concentration level and may affect the driver's ability to pay attention to and comprehend TTS voice prompts. Some existing systems attempt to compensate for certain environmental conditions while generating TTS voice prompts for automotive vehicles. For example, some systems monitor vehicle speed or other vehicle operating parameters and attempt to schedule messages for time periods when a driver will be better equipped to listen to them, such as when a driver is stopped or moving slowly. Other systems relating to vehicle navigation may use vehicle speed and estimated driver reaction times to give verbal instructions, such as "turn right," at appropriate times.

However, none of these existing systems addresses the fact that in responding to changing environmental conditions, a driver may be required to put more concentration into driving and controlling a vehicle, leaving less mental power available for other activities, including listening to and concentrating on a TTS system. In fact, under stressful driving conditions, a driver may perceive a slower TTS voice as being normal, and a normal-speed voice as being too fast. On the other hand, under non-stressful conditions, a driver requires less mental effort, and a slower TTS voice may irritate or bore the driver. Likewise, other parameters of a TTS voice, such as pitch or volume, may also require tuning to optimize intelligibility to a driver under different stress conditions.

However, none of the existing automotive TTS systems analyze vehicle sensor data in order to apply corrections to various parameters of the TTS synthesized voice, such as voice speed, pitch, and volume, among others, to compensate for environmental conditions. In fact, most TTS systems are tuned at the factory for a single representative vehicle operating condition and cannot be dynamically optimized to compensate for changing environmental conditions. Thus, it would be useful to provide a system and method for optimizing the output voice parameters of an automotive TTS system to achieve maximum intelligibility across a wide variety of vehicle operating conditions.

### SUMMARY OF THE INVENTION

An embodiment of an automotive TTS control system in accordance with the present invention comprises one or more vehicle sensors adapted to measure one or more operating states of an automotive vehicle. The vehicle sensors are coupled to a TTS engine that includes a storage module for storing a number of TTS audio parameters that affect the output voice quality of a TTS speech synthesizer. The TTS engine also includes one or more TTS tuning modules that analyze the operating states of the vehicle based on the measurements acquired from the vehicle sensors and calculate changes to the TTS audio parameters to alter the quality of the TTS synthesized voice in order to increase its intelligibility, given the measured states of the vehicle.

The measured states of the vehicle may include the vehicle speed, an interior noise level of the vehicle, a number of occupants of a vehicle and their locations within the vehicle, the lighting conditions of the environment, weather conditions that may affect driving or visibility, road roughness conditions, or any other environmental conditions that may have an effect on the concentration level of the vehicle operator. A wide variety of sensors may be employed to measure these vehicle operating states. For example, vehicle speed may be obtained from a speedometer, an odometer, an anti-lock brake sensor measuring deceleration, a global positioning sensor, or any other sensor that provides a direct or indirect indication of vehicle speed. Similarly, interior noise levels may be measured directly using a microphone, or may be inferred from sensors such as a window up/down sensor that would imply increased wind noise when a window is opened, a vehicle speed sensor that would imply increased noise at higher speeds, a vehicle suspension sensor that would indicate increased noise on a rough road, or any other type of sensor that might indicate the noise level inside a vehicle. The number of occupants of a vehicle and their locations may be measured using pressure sensors, weight sensors, or any other sensors indicating the presence of an occupant. Lighting conditions of the environment in which a vehicle is operating may be measured directly using an ambient light sensor, or could be inferred from a headlight on/off sensor, or any other sensor indicative of lighting conditions. Similarly, weather conditions may be inferred from measurements taken by a temperature sensor or from a windshield wiper on/off sensor, or any other sensor providing an indication of weather conditions. Road conditions may be inferred from measurement from a vehicle suspension sensor, from accelerometers indicating up/down motion of a vehicle, or from any other sensor giving an indication of road roughness. The aforementioned list of sensors is representative of those that might be employed in an embodiment of the present invention and is not intended to limit the scope of the invention. Any other type of sensor that would provide information about the state of the vehicle or its environment would also fall within the scope and spirit of the present invention.

In an embodiment of a TTS control system in accordance with the present invention, the control system may adjust TTS synthesized voice parameters based on measurements of the state of vehicle to increase the level of intelligibility. TTS audio parameters that may be adjusted include the TTS voice volume, the TTS voice speed, the TTS voice pitch, and the speakers to which the TTS voice is directed, among others. Other characteristics of a TTS voice, such as the gender of the voice, the language, or a particular regional accent may also be adjusted according to sensor inputs, such as a microphone that samples the driver's voice, or an input sensor with which the driver makes a preference selection.

An embodiment of a TTS control system also includes one or more TTS tuning modules responsible for relating measurements of the vehicle state to audio parameters of the TTS voice synthesizer in a way that compensates for the vehicle state to increase intelligibility. In one embodiment of a TTS tuning module in accordance with the present invention, values of measured vehicle states are divided into bins. For example, the state of the vehicle speed may be divided into bins corresponding to zero-to-thirty miles per hour, thirty-to-sixty miles per hour, and greater-than-sixty miles per hour, or any other division corresponding to a desired level of granularity. For each of the vehicle state bins, a value for each of the TTS audio parameters is provided. Based on the bin in which a measured vehicle state lies, appropriate TTS audio parameters are assigned.

In another embodiment of a TTS tuning module, values of TTS audio parameters are assigned based on a piecewise-linear function relating audio parameters to values of measured vehicle states. In still another embodiment of a TTS tuning module, values of TTS audio parameters are related to vehicle state parameters by a continuous function. Other methods of associating audio parameters with measured vehicle states are also possible and would lie within the scope and spirit of the present invention. Additional embodiments and advantages of the present invention will be clear to those skilled in the art by examination of the following detailed description and attached sheets of drawings that will first be described briefly.

### BRIEF DESCRIPTION OF THE DRAWINGS

Figure 1 depicts a typical driving scenario in which a vehicle operator uses a TTS system in different operating environments;
Figure 2 is a block diagram of a TTS control system in accordance with an embodiment of the present invention indicating interfaces to multiple vehicle sensors used to determine states of the vehicle;
Figure 3 is more detailed block diagram of an embodiment of a TTS control engine in accordance with the present invention;
Figures 4-6 are schematic diagrams of embodiments of TTS tuning modules in accordance with the present invention illustrating the association of vehicle states with TTS audio parameters;
Figure 7 depicts an embodiment of a TTS tuning module in tabular form; and
Figure 8 depicts an embodiment of a TTS tuning module illustrating a functional relationship of TTS audio parameters to multiple vehicle states.

### DETAILED DESCRIPTION OF THE PREFERRED EMBODIMENT

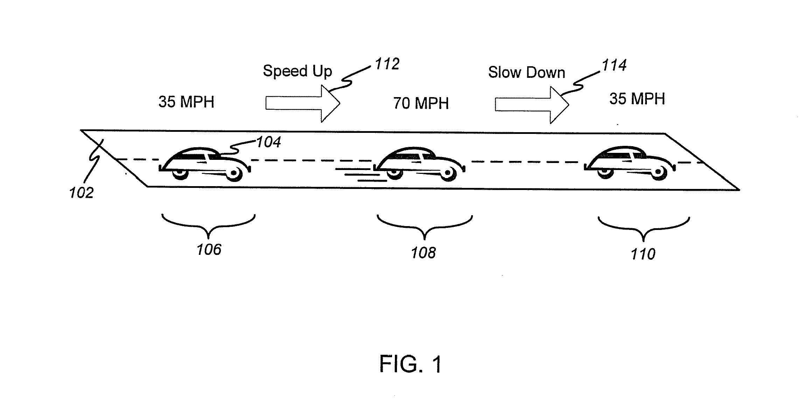

A text-to-speech (TTS) system for automotive vehicles is presented that allows for optimal tuning of TTS speech parameters to maximize intelligibility across a wide variety of driving conditions. A typical driving scenario is depicted in Figure 1. A vehicle 104 travels along a road 102. During a first time interval 106, the vehicle is moving at thirty-five miles per hour with minimal environmental noise resulting from the operation of the engine, the tires on the road, and the interaction of wind with the chassis. During interval 106, the driver may be relatively relaxed and not under considerable stress. When the driver uses the TTS system during interval 106, the speed, pitch, volume, and other characteristics of the synthesized voice may be adjusted accordingly. For example, the speed of the synthesized voice may be set relatively high, the volume may be set relatively low, and the pitch and other properties of the synthesized voice may be set to desirable levels associated with this environmental condition.

The vehicle 104 then accelerates 112 to seventy miles per hour, and the driver again uses the TTS system during interval 108. The increased speed of the vehicle may increase the driver's stress and concentration levels and also increase engine, road, and wind noise. Accordingly, the speed of the synthesized TTS voice may be reduced to take into account the increased stress level of the driver, and the volume may be increased to compensate for the increased interior noise level due to the increased speed.

Finally, the vehicle decelerates 114 back down to thirty-five miles per hour, and during time interval 110, the driver again uses the TTS system. Because the driver's stress level may be lower due to the decreased speed, the speed of the synthesized voice may be increased, and because of the reduced noise levels, the volume may be decreased. Thus, the synthesized TTS voice is played with optimized parameters for each set of environmental conditions to maximize intelligibility while minimizing driver frustration.

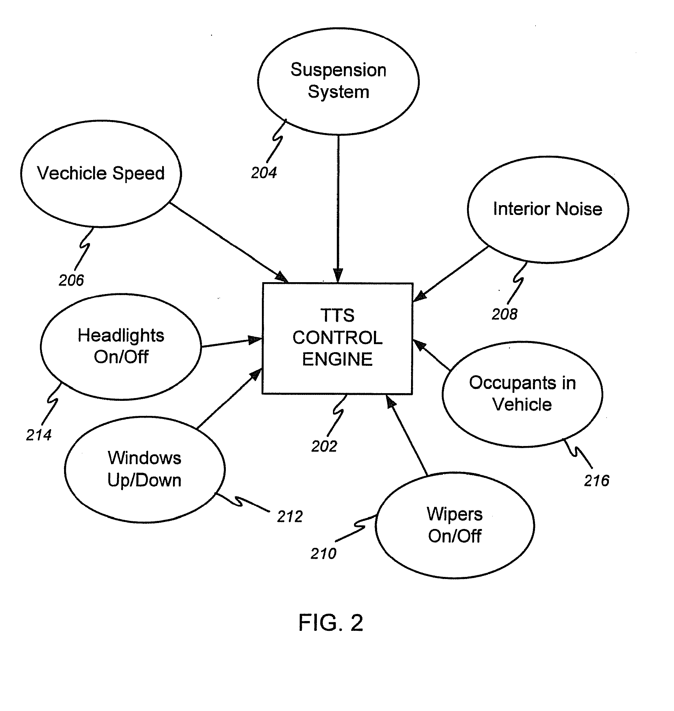

The example presented in Figure 1 illustrates the operation of a very simple embodiment of a variable TTS system in accordance with the present invention that uses vehicle speed as the primary sense variable to adjust TTS parameters. However, many other sense variables and sensors can be used to achieve optimal performance of the TTS system. Figure 2 is a block diagram of an embodiment of a variable TTS system in accordance with the present invention that incorporates a large number of active sensors. A TTS control engine 202 receives inputs from a variety of vehicle sensors. For example, a vehicle speed sensor 206 reports data on the current speed or speed history of the vehicle. Sensor 206 could comprise a vehicle speedometer, a vehicle odometer combined with a time signal, an anti-lock-braking sensor indicating deceleration, a global-positioning sensor indicating vehicle movement, or any other sensor that may give an indication of vehicle speed. An interior noise sensor 208 provides data to the TTS control engine 202 that gives an indication of vehicle noise. Such a sensor could comprise a microphone that takes a direct sample of interior noise, or it could include sensors that give an indirect indication of noise levels, such as vehicle speed, whether windows are opened or closed, whether a vehicle radio is turned on or off, or any other sensor that might imply a quiet or noisy interior. A suspension system sensor 204 may provide an indication of the type a surface a vehicle is moving over. A rough surface could indicate increased interior noise, and increased concentration requirements and stress on the driver. Similarly, a windshield wiper on/off sensor 201 may indicate poor weather conditions and poor visibility that would result in increased driver stress and concentration requirements. A window up/down sensor 212 may indicate increased interior noise levels and increased distraction of the driver. A headlight sensor 214 may indicate lighting conditions of the environment in which the vehicle is operating and could be indicative of poor visibility conditions. An occupant sensor 216 may indicate how many individuals are in the vehicle and where they are seated. Such information could be acquired using weight sensors, pressure sensors, or any other sensors capable of sensing an occupant. This information could be used to indicate noise levels in the vehicle and could also be used to direct vehicle messages to speakers near to the intended recipient. For example, spoken driving directions could be directed to speakers close to the driver to better enhance their intelligibility while minimizing distractions to other occupants of the vehicle. Other messages could be broadcast more generally to all of the occupants by directing them to speakers throughout the vehicle.

The above described sensors are depicted as exemplary vehicle sensors only and are not intended to limit the scope of the invention. Many other vehicle operating parameter sensors are possible, including electrical system sensors, fuel sensors, and weight sensors, among others, and all could be used as inputs to a TTS control engine 202 in accordance with the present invention.

The TTS control engine 202 operates on the received sensor data to understand the current state of the vehicle and then compares this state to a number of models stored in the control unit to determine a human reaction to the perceived vehicle state and to apply countermeasures to the TTS speech synthesis operation to compensate. For example, as a driver speeds up, the amount of concentration required to control the vehicle increases. When the driver then listens to an audio stream, the brain must concentrate on two tasks at once, and this becomes more difficult as more concentration is required to control the vehicle. When the audio stream is slowed down, the driver is better able to comprehend it while maintaining a consistent concentration level on the driving task, and in most cases, the driver will not even notice that the audio stream has been slowed down. Similarly, a driver's receptiveness to volume and pitch levels and other characteristics of synthesized TTS voices may also be affected by the driver's concentration level or stress level under different vehicle operating conditions. Directing a TTS voice preferentially to certain speakers within an automotive vehicle may also improve intelligibility in certain situations. For example, driving directions indicating a right turn that are played from the right speakers and directions indicating a left turn played from the left speakers may improve their intelligibility to the driver. Adjustments of any characteristics of a TTS voice to improve intelligibility given the operating environment of the vehicle would fall within the scope of the present invention.

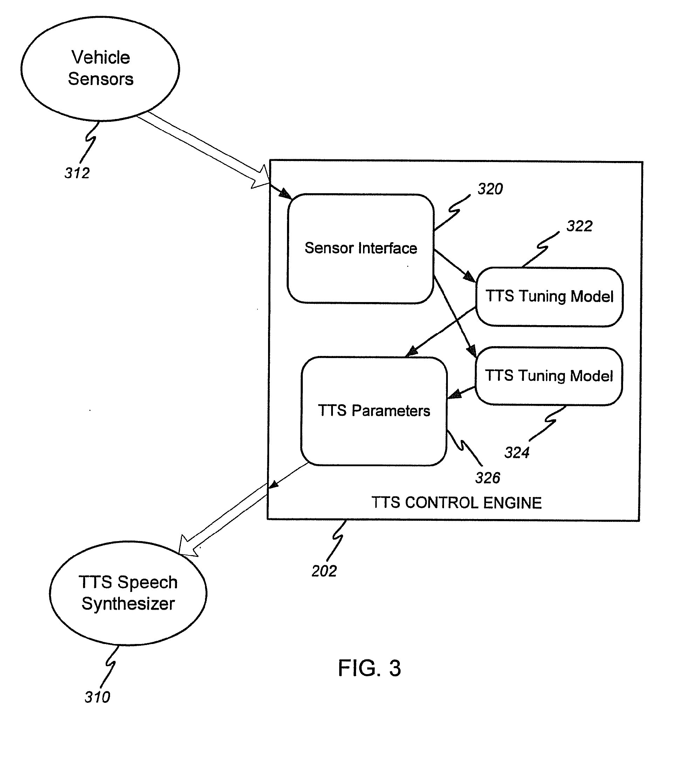

Figure 3 presents a block diagram of an embodiment of a TTS control engine 202 in accordance with the present invention. The TTS control engine 202 includes a sensor interface 320 that interacts with one or more vehicle sensors 312 to determine a state of the vehicle. The determination of the state of the vehicle may involve such parameters as vehicle speed, internal vehicle noise, road conditions, weather conditions, and lighting conditions, among other parameters that may be determined from vehicle sensors as discussed previously. The sensor interface 320 then passes vehicle state information to one or more TTS tuning modules 322, 324 that classify vehicle states and relate them to human reactions and associated countermeasures that can be brought into effect through the adjustment of TTS speech synthesis parameters. Such speech synthesis parameters are stored in a TTS parameter module 326 and can be updated or modified based on the one or more TTS tuning models 322, 324 that take into account the current state of the vehicle and its environment. The TTS control engine 202 then exports parameters from the TTS parameter module 326 to the TTS speech synthesizer 310 to cause the TTS audio stream played to the driver to be modified according to the identified countermeasures.

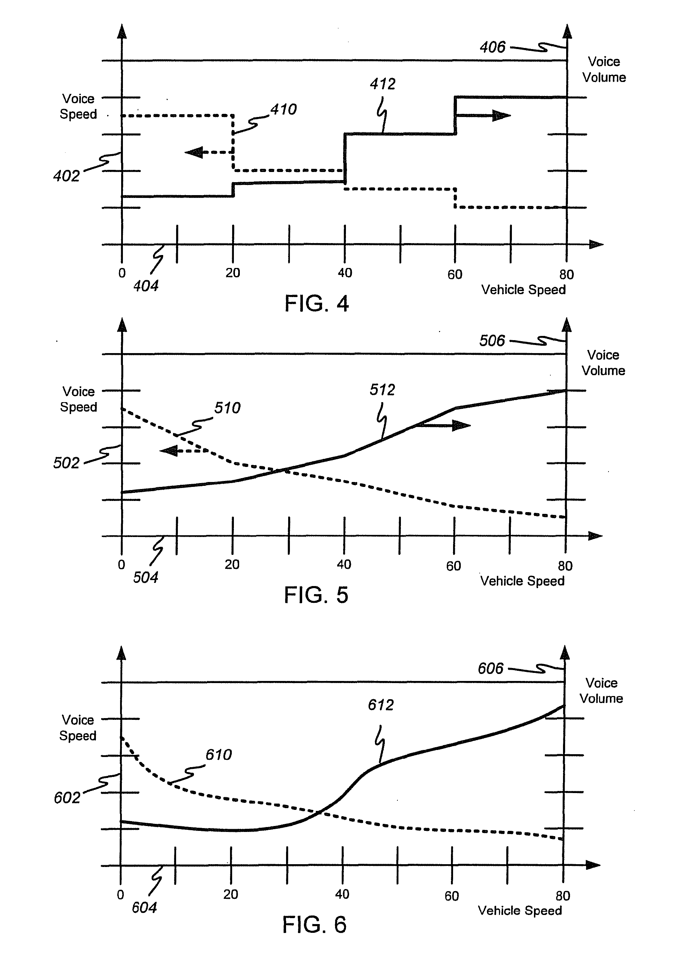

The TTS tuning modules may take a variety of forms. Figures 4-6 depict several examples of simple tuning modules relating TTS voice speed and TTS voice volume to vehicle speed. In Figure 4, voice speed is plotted along a left vertical axis 402, and voice volume is plotted along a right vertical axis 406. Vehicle speed is plotted along a horizontal axis 404. In this embodiment of a TTS tuning model, speed is quantized into bins of twenty miles per hour, and a voice speed and a voice volume are assigned to each speed bin. The dashed trace 410 plots voice speed as a function of vehicle speed. As a vehicle accelerates from 10 to 30 miles per hour, trace 10 shows that the voice speed of the TTS synthesizer may drop from an initial high speed to a lower speed to account for the increased mental effort a driver might expend controlling the vehicle. Similarly, the solid trace 412 indicates the voice volume as a function of vehicle speed. As the vehicle accelerates, the voice volume may make discrete increasing jumps to compensate for increased vehicle noise associated with increased speed.

Figure 5 illustrates an alternative approach that uses piecewise-linear functions to relate voice speed and voice volume to vehicle speed. Rather than making discrete jumps at predetermined vehicle speed values, the voice speed trace 510 may decrease linearly with a first slope as the vehicle speed increases from zero to twenty miles per hour, and then decrease linearly with a second slope as the vehicle speed increases from twenty to forty miles per hour. Similarly, the voice volume trace 512 indicates that voice volume may increase linearly with vehicle speed with a series of discrete slopes.

Figure 6 illustrates yet another alternative approach that replaces the piecewise-linear functions with smooth curves. The dashed curve 610 indicates the voice speed as a function of vehicle speed, and the solid curve 612 indicates the voice volume as a function of vehicle speed. The smooth curves provide a continuous adjustment of the TTS speech parameters with changing vehicle speed that may be less noticeable to the driver but that may also require increased hardware or software resources to implement. Other embodiments of a TTS system may use a combination of the types of TTS tuning modules described above or alternative tuning modules for handling different TTS audio parameters.

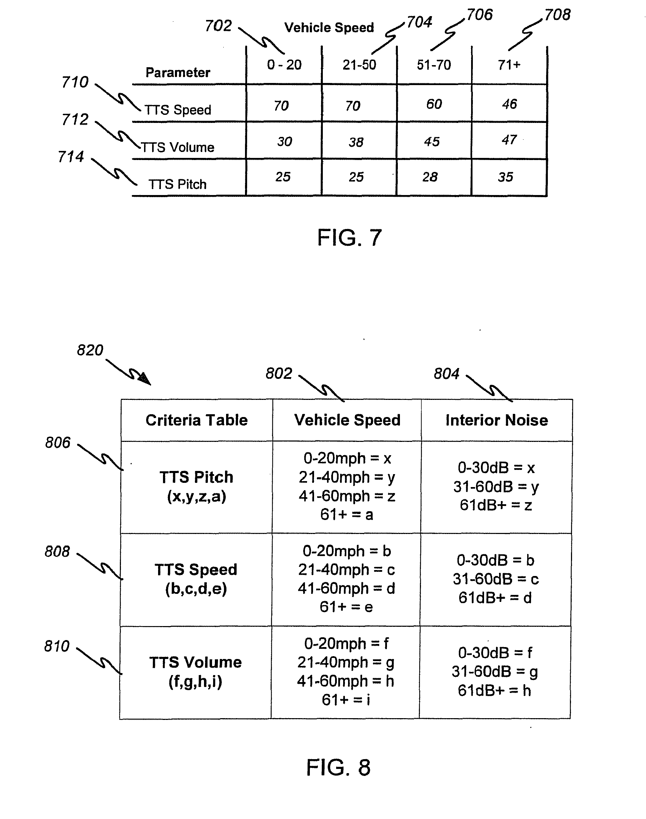

Figure 7 illustrates another embodiment of a TTS tuning module based on a parameter look-up table. Vehicle speed is tabulated horizontally across the table with exemplary bin 702 for speeds of zero to twenty miles per hour, bin 704 for speeds from twenty-one to fifty miles per hour, bin 706 for fifty-one to seventy miles per hour, and bin 708 for speeds of seventy-one miles per hour or greater. For each vehicle speed bin 702, 704, 706, and 708, values of various TTS parameters are tabulated along a vertical axis of the table. For example, TTS speed 710, TTS volume 712, and TTS pitch 714 may be tabulated. Depending on the current vehicle speed, as determined by the TTS control engine 202 (see Figure 3), one of the vehicle speed bins 702, 704, 706, or 708 will be selected, and the corresponding TTS parameters will be sent to the TTS speech synthesizer 310 to configure the TTS output voice to compensate for the measured vehicle conditions.

For simplicity, Figures 4-7 have depicted TTS tuning modules that are operative to adjust TTS parameters based on a single variable, i.e., vehicle speed. However, any number of vehicle operational parameters may be incorporated into the tuning modules to tune the TTS speech synthesizer. For example, such parameters may include internal vehicle noise levels, weather conditions, the number and location of occupants of the vehicle, levels of visibility, road conditions, etc. Idiosyncrasies of a particular driver may also comprise operational parameters that can be used to tune a TTS system. For example, a driver preference for a male or female voice, or for a certain language or regional accent could be determined by analyzing a driver's own voice through a microphone sampling system or by requesting user input on preferences. Such operational parameters would also fall within the scope and spirit of the present invention.

Figure 8 depicts yet another embodiment of a TTS tuning module in accordance with the present invention that contains a plurality of TTS parameter functions that are functions of multiple variables. For example, criteria table 820 relates three TTS parameters, TTS pitch 806, TTS speed 808, and TTS volume 810, to two measured vehicle parameters, vehicle speed 802, and interior noise 804. The TTS volume function 810, for example, is a function that is tabulated for a plurality of vehicle speed bins and interior noise bins. This function may act to increase the TTS volume even for low speeds if the interior noise parameters indicate high levels of background noise (e.g., if the vehicle windows have been opened). Note that it is not necessary that the parameter functions 806, 808, and 810 be discrete binned look-up tables as implied by the binning of the vehicle speed 802 and interior noise 804 variables in Figure 8. The TTS parameter functions may also be continuous or piecewise-linear functions of multiple sensor variables along the lines of the embodiments described in Figures 5 and 6.

The foregoing description has discussed several embodiments of a system for actively optimizing TTS speech synthesis to maximize intelligibility of voice prompts in an automotive vehicle application. Other embodiments and advantages of the invention may be apparent to those skilled in the art, and such would lie within the scope and spirit of the present invention. The invention is further defined by the following claims.

A text-to-speech (TTS) system implemented in an automotive vehicle is dynamically tuned to improve intelligibility over a wide variety of vehicle operating states and environmental conditions. In one embodiment of the present invention, a TTS system is interfaced to one or more vehicle sensors to measure parameters including vehicle speed, interior noise, visibility conditions, and road roughness, among others. In response to measurements of these operating parameters, TTS voice volume, pitch, and speed, among other parameters, may be tuned in order to improve intelligibility of the TTS voice system and increase its effectiveness for the operator of the vehicle.

## Claims

1. A text-to-speech (TTS) control system for use in an automotive vehicle comprising:
at least one vehicle sensor adapted for measuring at least one operating state of the automotive vehicle;
a TTS engine operatively coupled to the at least one vehicle sensor and including:
a storage module adapted for storing a plurality of TTS audio parameters; and
at least one TTS tuning module adapted for updating at least one of the plurality of TTS audio parameters based on the at least one operating state of the automotive vehicle measured by the at least one vehicle sensor; and
a TTS speech synthesizer operatively coupled to the TTS engine and adapted for receiving the plurality of TTS audio parameters from the storage module and for producing a synthesized voice **characterized by** the plurality of TTS audio parameters.

2. The TTS control system of Claim 1, wherein the at least one operating state of the automotive vehicle comprises at least one of:
a speed of the automotive vehicle;
an interior noise level of the automotive vehicle;
a number of occupants of the automotive vehicle;
a lighting condition of an environment in which the automotive vehicle is operating;
a weather condition of an environment in which the automotive vehicle is operating; and
a road roughness condition of a road over which the automotive vehicle is moving.

3. The TTS control system of Claim 2, wherein the at least one vehicle sensor adapted to measure the speed of the automotive vehicle comprises at least one of a speedometer, an odometer, an anti-lock brake sensor, and a global positioning sensor.

4. The TTS control system of Claim 2, wherein the at least one vehicle sensor adapted to measure the interior noise level of the automotive vehicle comprises at least one of a microphone, a window up/down sensor, a vehicle speed sensor, and a vehicle suspension sensor.

5. The TTS control system of Claim 2, wherein the at least one vehicle sensor adapted to measure the number of occupants of the automotive vehicle comprises at least one of a pressure sensor and a weight sensor.

6. The TTS control system of Claim 2, wherein the at least one vehicle sensor adapted to measure the lighting condition of an environment in which the automotive vehicle is operating comprises at least one of a headlight on/off sensor, and an ambient light sensor.

7. The TTS control system of Claim 2, wherein the at least one vehicle sensor adapted to measure the weather condition of an environment in which the automotive vehicle is operating comprises at least one of a windshield wiper on/off sensor, and a temperature sensor.

8. The TTS control system of Claim 2, wherein the at least one vehicle sensor adapted to measure the road roughness condition of a road over which the automotive vehicle is moving comprises at least one of a vehicle suspension sensor, and an accelerometer.

9. The TTS control system of Claim 1, wherein the at least one operating state of the automotive vehicle comprises:
a speed of the automotive vehicle; and
an interior noise level of the automotive vehicle.

10. The TTS control system of Claim 1, wherein the at least one operating state of the automotive vehicle comprises:
a speed of the automotive vehicle;
an interior noise level of the automotive vehicle;
a number of occupants of the automotive vehicle;
a lighting condition of an environment in which the automotive vehicle is operating;
a weather condition of an environment in which the automotive vehicle is operating; and
a road roughness condition of a road over which the automotive vehicle is moving.

11. The TTS control system of Claim 1, wherein the plurality of TTS audio parameters stored in the storage module comprises at least one of a TTS voice speed, a TTS voice volume, a TTS voice pitch, and an indication of audio speakers to which the synthesized voice is directed.

12. The TTS control system of Claim 1, wherein the plurality of TTS audio parameters stored in the storage module comprises a TTS voice speed, a TTS voice volume, a TTS voice pitch, and an indication of audio speakers to which the synthesized voice is directed.

13. The TTS control system of Claim 1, wherein the at least one TTS tuning module comprises a relational table configured to relate values of the at least one operating state of the automotive vehicle measured by the at least one vehicle sensor to values of the plurality of TTS audio parameters stored in the storage module.

14. The at least one TTS tuning module of Claim 13 wherein the relational table is operative to divide values of the at least one operating state of the automotive vehicle into a plurality of bins and to associate values of the plurality of TTS audio parameters with each one of the plurality of bins.

15. The at least one TTS tuning module of Claim 13 wherein the relational table is operative to associate values of the plurality of TTS audio parameters with values of the at least one operating state of the automotive vehicle such that values of the plurality of TTS audio parameters follow a piecewise-linear function of values of the at least one operating state.

16. The at least one TTS tuning module of Claim 13 wherein the relational table is operative to associate values of the plurality of TTS audio parameters with values of the at least one operating state of the automotive vehicle such that values of the plurality of TTS audio parameters follow a continuous function of values of the at least one operating state.

17. In an automotive vehicle equipped with a text-to-speech (TTS) system, a method of increasing intelligibility of a synthesized TTS voice to compensate for environmental conditions comprises the steps of:
measuring at least one operating state of the automotive vehicle;
relating the at least one operating state of the automotive vehicle to a plurality of TTS audio parameters;
updating the plurality of TTS audio parameters based on the at least one operating state of the automotive vehicle;
storing the plurality of TTS audio parameters;
applying the plurality of TTS audio parameters to the synthesized TTS voice to achieve increased intelligibility.

18. The method of Claim 17, wherein the step of measuring at least one operating state of the automotive vehicle further comprises at least one of the steps of:
measuring a speed of the automotive vehicle;
measuring an interior noise level of the automotive vehicle;
measuring a number of occupants of the automotive vehicle;
measuring a lighting condition of an environment in which the automotive vehicle is operating;
measuring a weather condition of an environment in which the automotive vehicle is operating; and
measuring a road roughness condition of a road over which the automotive vehicle is moving.

19. The method of Claim 17, wherein the step of measuring at least one operating state of the automotive vehicle includes measuring a speed of the automotive vehicle by performing at least one of the steps of:
acquiring a speedometer measurement;
acquiring an odometer measurement;
acquiring an anti-lock brake sensor measurement; and
acquiring a global-positioning-sensor measurement.

20. The method of Claim 17, wherein the step of measuring at least one operating state of the automotive vehicle includes measuring an interior noise level of the automotive vehicle by performing at least one of the steps of:
acquiring a microphone measurement;
acquiring a window up/down sensor measurement;
acquiring a vehicle speed sensor measurement; and
acquiring a vehicle suspension sensor measurement.

21. The method of Claim 17, wherein the step of measuring at least one operating state of the automotive vehicle includes measuring a number of occupants of the automotive vehicle by performing at least one of the steps of:
acquiring a pressure sensor measurement; and
acquiring a weight sensor measurement.

22. The method of Claim 17, wherein the step of measuring at least one operating state of the automotive vehicle includes measuring a lighting condition of an environment in which the automotive vehicle is operating by performing at least one of the steps of:
acquiring a headlight on/off sensor measurement; and
acquiring an ambient light sensor measurement.

23. The method of Claim 17, wherein the step of measuring at least one operating state of the automotive vehicle includes measuring a weather condition of an environment in which the automotive vehicle is operating by performing at least one of the steps of:
acquiring a windshield wiper on/off sensor measurement; and
acquiring a temperature sensor measurement.

24. The method of Claim 17, wherein the step of measuring at least one operating state of the automotive vehicle includes measuring a road roughness condition of a road over which the automotive vehicle is moving by performing at least one of the steps of:
acquiring a vehicle suspension sensor measurement; and
acquiring an accelerometer measurement.

25. The method of Claim 17, wherein the step of measuring at least one operating state of the automotive vehicle further comprises the steps of:
measuring a speed of the automotive vehicle; and
measuring an interior noise level of the automotive vehicle.

26. The method of Claim 17, wherein the step of measuring at least one operating state of the automotive vehicle further comprises the steps of:
measuring a speed of the automotive vehicle;
measuring an interior noise level of the automotive vehicle;
measuring a number of occupants of the automotive vehicle;
measuring a lighting condition of an environment in which the automotive vehicle is operating;
measuring a weather condition of an environment in which the automotive vehicle is operating; and
measuring a road roughness condition of a road over which the automotive vehicle is moving.

27. The method of Claim 17, wherein the step of updating the plurality of TTS audio parameters based on the at least one operating state of the automotive vehicle further comprises at least one of the steps of:
updating a TTS voice speed parameter;
updating a TTS voice volume parameter;
updating a TTS voice pitch parameter; and
updating an indication of audio speakers to which the synthesized voice is directed.

28. The method of Claim 17, wherein the step of updating the plurality of TTS audio parameters based on the at least one operating state of the automotive vehicle further comprises the steps of:
updating a TTS voice speed parameter;
updating a TTS voice volume parameter;
updating a TTS voice pitch parameter; and
updating an indication of audio speakers to which the synthesized voice is directed.

29. The method of Claim 17, wherein the step of relating the at least one operating state of the automotive vehicle to a plurality of TTS audio parameters further comprises the steps of:
dividing values of the at least one operating state of the automotive vehicle into a plurality of bins; and
associating values of the plurality of TTS audio parameters with each one of the plurality of bins.

30. The method of Claim 17, wherein the step of relating the at least one operating state of the automotive vehicle to a plurality of TTS audio parameters further comprises the step of calculating values of the plurality of TTS audio parameters according to a piece-wise linear function of the at least one operating state of the automotive vehicle.

31. The method of Claim 17, wherein the step of relating the at least one operating state of the automotive vehicle to a plurality of TTS audio parameters further comprises the step of calculating values of the plurality of TTS audio parameters according to a continuous function of the at least one operating state of the automotive vehicle.

## Amended claims

### Amended claims in accordance with Rule 137(2) EPC.

**1.** A text-to-speech (TTS) control system for use in an automotive vehicle comprising:
at least one vehicle sensor adapted for measuring at least one operating state of the automotive vehicle;
a TTS engine operatively coupled to the at least one vehicle sensor and including:
a storage module adapted for storing a plurality of TTS audio parameters; and
at least one TTS tuning module adapted for updating at least one of the plurality of TTS audio parameters based on the at least one operating state of the automotive vehicle measured by the at least one vehicle sensor; and
a TTS speech synthesizer operatively coupled to the TTS engine and adapted for receiving the plurality of TTS audio parameters from the storage module and for producing a synthesized voice **characterized by** the plurality of TTS audio parameters,
**characterized in that**
the plurality of TTS audio parameters stored in the storage module comprises an indication of audio speakers to which the synthesized voice indicating a turning direction has to be directed, wherein the direction of arrangement of the audio speakers corresponds to the indicated turning direction.

**2.** The TTS control system of Claim 1, wherein the at least one operating state of the automotive vehicle comprises at least one of:
a speed of the automotive vehicle;
an interior noise level of the automotive vehicle;
a number of occupants of the automotive vehicle;
a lighting condition of an environment in which the automotive vehicle is operating;
a weather condition of an environment in which the automotive vehicle is operating; and
a road roughness condition of a road over which the automotive vehicle is moving.

**3.** The TTS control system of Claim 2, wherein the at least one vehicle sensor adapted to measure the speed of the automotive vehicle comprises at least one of a speedometer, an odometer, an anti-lock brake sensor, and a global positioning sensor.

**4.** The TTS control system of Claim 2, wherein the at least one vehicle sensor adapted to measure the interior noise level of the automotive vehicle comprises at least one of a microphone, a window up/down sensor, a vehicle speed sensor, and a vehicle suspension sensor.

**5.** The TTS control system of Claim 2, wherein the at least one vehicle sensor adapted to measure the number of occupants of the automotive vehicle comprises at least one of a pressure sensor and a weight sensor.

**6.** The TTS control system of Claim 2, wherein the at least one vehicle sensor adapted to measure the lighting condition of an environment in which the automotive vehicle is operating comprises at least one of a headlight on/off sensor, and an ambient light sensor.

**7.** The TTS control system of Claim 2, wherein the at least one vehicle sensor adapted to measure the weather condition of an environment in which the automotive vehicle is operating comprises at least one of a windshield wiper on/off sensor, and a temperature sensor.

**8.** The TTS control system of Claim 2, wherein the at least one vehicle sensor adapted to measure the road roughness condition of a road over which the automotive vehicle is moving comprises at least one of a vehicle suspension sensor, and an accelerometer.

**9.** The TTS control system of Claim 1, wherein the at least one operating state of the automotive vehicle comprises:
a speed of the automotive vehicle; and
an interior noise level of the automotive vehicle.

**10.** The TTS control system of Claim 1, wherein the at least one operating state of the automotive vehicle comprises:
a speed of the automotive vehicle;
an interior noise level of the automotive vehicle;
a number of occupants of the automotive vehicle;
a lighting condition of an environment in which the automotive vehicle is operating;
a weather condition of an environment in which the automotive vehicle is operating; and
a road roughness condition of a road over which the automotive vehicle is moving.

**11.** The TTS control system of Claim 1, wherein the plurality of TTS audio parameters stored in the storage module further comprises at least one of a TTS voice speed, a TTS voice volume and a TTS voice pitch.

**12.** The TTS control system of Claim 1, wherein the plurality of TTS audio parameters stored in the storage module further comprises a TTS voice speed, a TTS voice volume and a TTS voice pitch.

**13.** The TTS control system of Claim 1, wherein the at least one TTS tuning module comprises a relational table configured to relate values of the at least one operating state of the automotive vehicle measured by the at least one vehicle sensor to values of the plurality of TTS audio parameters stored in the storage module.

**14.** The at least one TTS tuning module of Claim 13 wherein the relational table is operative to divide values of the at least one operating state of the automotive vehicle into a plurality of bins and to associate values of the plurality of TTS audio parameters with each one of the plurality of bins.

**15.** The at least one TTS tuning module of Claim 13 wherein the relational table is operative to associate values of the plurality of TTS audio parameters with values of the at least one operating state of the automotive vehicle such that values of the plurality of TTS audio parameters follow a piecewise-linear function of values of the at least one operating state.

**16.** The at least one TTS tuning module of Claim 13 wherein the relational table is operative to associate values of the plurality of TTS audio parameters with values of the at least one operating state of the automotive vehicle such that values of the plurality of TTS audio parameters follow a continuous function of values of the at least one operating state.

**17.** In an automotive vehicle equipped with a text-to-speech (TTS) system, a method of increasing intelligibility of a synthesized TTS voice to compensate for environmental conditions comprises the steps of:
measuring at least one operating state of the automotive vehicle;
relating the at least one operating state of the automotive vehicle to a plurality of TTS audio parameters;
updating the plurality of TTS audio parameters based on the at least one operating state of the automotive vehicle;
storing the plurality of TTS audio parameters;
applying the plurality of TTS audio parameters to the synthesized TTS voice to achieve increased intelligibility,
**characterized in that**
the step of updating the plurality of TTS audio parameters based on the at least one operating state of the automotive vehicle further comprises the step of:
updating an indication of audio speakers to which the synthesized voice indicating a turning direction has to be directed, wherein the direction of arrangement of the audio speakers corresponds to the indicated turning direction.

**18.** The method of Claim 17, wherein the step of measuring at least one operating state of the automotive vehicle further comprises at least one of the steps of:
measuring a speed of the automotive vehicle;
measuring an interior noise level of the automotive vehicle;
measuring a number of occupants of the automotive vehicle;
measuring a lighting condition of an environment in which the automotive vehicle is operating;
measuring a weather condition of an environment in which the automotive vehicle is operating; and
measuring a road roughness condition of a road over which the automotive vehicle is moving.

**19.** The method of Claim 17, wherein the step of measuring at least one operating state of the automotive vehicle includes measuring a speed of the automotive vehicle by performing at least one of the steps of:
acquiring a speedometer measurement;
acquiring an odometer measurement;
acquiring an anti-lock brake sensor measurement; and
acquiring a global-positioning-sensor measurement.

**20.** The method of Claim 17, wherein the step of measuring at least one operating state of the automotive vehicle includes measuring an interior noise level of the automotive vehicle by performing at least one of the steps of:
acquiring a microphone measurement;
acquiring a window up/down sensor measurement;
acquiring a vehicle speed sensor measurement; and
acquiring a vehicle suspension sensor measurement.

**21.** The method of Claim 17, wherein the step of measuring at least one operating state of the automotive vehicle includes measuring a number of occupants of the automotive vehicle by performing at least one of the steps of:
acquiring a pressure sensor measurement; and
acquiring a weight sensor measurement.

**22.** The method of Claim 17, wherein the step of measuring at least one operating state of the automotive vehicle includes measuring a lighting condition of an environment in which the automotive vehicle is operating by performing at least one of the steps of:
acquiring a headlight on/off sensor measurement; and
acquiring an ambient light sensor measurement.

**23.** The method of Claim 17, wherein the step of measuring at least one operating state of the automotive vehicle includes measuring a weather condition of an environment in which the automotive vehicle is operating by performing at least one of the steps of:
acquiring a windshield wiper on/off sensor measurement; and
acquiring a temperature sensor measurement.

**24.** The method of Claim 17, wherein the step of measuring at least one operating state of the automotive vehicle includes measuring a road roughness condition of a road over which the automotive vehicle is moving by performing at least one of the steps of:
acquiring a vehicle suspension sensor measurement; and
acquiring an accelerometer measurement.

**25.** The method of Claim 17, wherein the step of measuring at least one operating state of the automotive vehicle further comprises the steps of:
measuring a speed of the automotive vehicle; and
measuring an interior noise level of the automotive vehicle.

**26.** The method of Claim 17, wherein the step of measuring at least one operating state of the automotive vehicle further comprises the steps of:
measuring a speed of the automotive vehicle;
measuring an interior noise level of the automotive vehicle;
measuring a number of occupants of the automotive vehicle;
measuring a lighting condition of an environment in which the automotive vehicle is operating;
measuring a weather condition of an environment in which the automotive vehicle is operating; and
measuring a road roughness condition of a road over which the automotive vehicle is moving.

**27.** The method of Claim 17, wherein the step of updating the plurality of TTS audio parameters based on the at least one operating state of the automotive vehicle further comprises at least one of the steps of:
updating a TTS voice speed parameter;
updating a TTS voice volume parameter; and
updating a TTS voice pitch parameter.

**28.** The method of Claim 17, wherein the step of updating the plurality of TTS audio parameters based on the at least one operating state of the automotive vehicle further comprises the steps of:
updating a TTS voice speed parameter;
updating a TTS voice volume parameter; and
updating a TTS voice pitch parameter.

**29.** The method of Claim 17, wherein the step of relating the at least one operating state of the automotive vehicle to a plurality of TTS audio parameters further comprises the steps of:
dividing values of the at least one operating state of the automotive vehicle into a plurality of bins; and
associating values of the plurality of TTS audio parameters with each one of the plurality of bins.

**30.** The method of Claim 17, wherein the step of relating the at least one operating state of the automotive vehicle to a plurality of TTS audio parameters further comprises the step of calculating values of the plurality of TTS audio parameters according to a piece-wise linear function of the at least one operating state of the automotive vehicle.

**31.** The method of Claim 17, wherein the step of relating the at least one operating state of the automotive vehicle to a plurality of TTS audio parameters further comprises the step of calculating values of the plurality of TTS audio parameters according to a continuous function of the at least one operating state of the automotive vehicle.
